# FASCICULE DE BREVET EUROPEEN

(11) **EP 3 264 053 B1**
(45) Date de publication et mention de la délivrance du brevet: **28.04.2021**
(21) Numéro de dépôt: 17179382.1
(22) Date de dépôt: 03.07.2017
(51) Int. Cl.: E03F 5/22, E03C 1/122, G01F 23/74

(54) **MODULE DE DÉTECTION D'UN LIQUIDE ET DISPOSITIF D'ÉVACUATION D'UN LIQUIDE COMPRENANT UN TEL MODULE**
MODUL ZUR DETEKTION EINER FLÜSSIGKEIT, UND VORRICHTUNG FÜR DEN ABLAUF EINER FLÜSSIGKEIT, DIE EIN SOLCHES MODUL UMFASST
MODULE FOR DETECTING A LIQUID AND DEVICE FOR DISCHARGING A LIQUID COMPRISING SUCH A MODULE

(30) Priorité: 01.07.2016 FR 1656309
(43) Date de publication de la demande: 03.01.2018
(73) Titulaire: Société Française d'Assainissement - SFA, 75007 Paris (FR)
(72) Inventeur: Ballestra, Victor Jean, 91430 Vauhallan (FR)
(74) Mandataire: Ipsilon

(56) Documents cités:
- WO-A1-2010/035907
- CH-A- 521 573
- GB-A- 2 423 365
- GB-A- 2 431 415
- GB-A- 2 478 289
- US-A1- 2003 183 002

## Description

L'invention est relative à un module de détection d'un niveau de liquide et à un dispositif d'évacuation d'un liquide présent dans un contenant et qui comprend le module.

Le brevet GB2423365 décrit un système qui émet une alerte lorsque le niveau de liquide dans une conduite d'évacuation est trop élevé.

On connait également dans certains domaines tels que celui des bacs receveurs de douche des systèmes d'évacuation des eaux « grises » (eaux de lavage générées dans le bac), comme par exemple dans le document GB 2 478 289 A. Ces systèmes sont par exemple basés sur le déclenchement automatique d'une pompe d'aspiration disposée dans un logement situé à côté du bac lorsque l'eau à évacuer, présente dans le logement, atteint la membrane d'un pressostat relié à la pompe.

Un tel système commercialisé par la société SFA est par exemple connu du document FR 2 939 161.

Bien que ce système soit satisfaisant, il serait néanmoins souhaitable de concevoir un dispositif ou un composant d'un tel dispositif qui soit plus souple d'utilisation et qui puisse notamment être utilisé dans de nombreux domaines.

Dans ses recherches l'inventeur a développé un module qui peut servir de composant à un dispositif d'évacuation d'un liquide ou qui peut avoir d'autres applications.

La présente invention a ainsi pour objet un module de détection d'un niveau de liquide, caractérisé en ce qu'il comprend :
- un flotteur comprenant au moins un aimant, le flotteur étant apte à être en contact avec le liquide et à se soulever lorsque le niveau de liquide s'élève dans le module,
- au moins deux organes de détection qui sont aptes, d'une part, à coopérer électromagnétiquement avec ledit au moins un aimant du flotteur lorsque ce dernier s'est soulevé jusqu'à un premier niveau prédéterminé ON et, d'autre part, en fonction de cette coopération, à établir un contact dans un circuit électrique du module afin d'autoriser le passage d'un courant dans le circuit ledit flotteur étant également apte à s'éloigner de la paroi de séparation étanche lorsque le niveau de liquide baisse dans le module pour atteindre un deuxième niveau prédéterminé dans lequel ledit au moins un aimant du flotteur ne coopère plus électromagnétiquement avec lesdits au moins deux organes de détection, lesdits au moins deux organes de détection étant séparés du flotteur par une paroi étanche qui est disposée au-dessus du flotteur et ce, quel que soit le niveau du flotteur dans le module, une excroissance ayant une forme de tige s'étendant vers le bas à partir de la paroi étanche à laquelle elle est raccordée et en éloignement de celle ci, le flotteur formant une ceinture annulaire autour de la tige et l'aimant ayant une forme générale de tore, lesdits au moins deux organes de détection étant disposés à une même cote au-dessus de ladite paroi étanche et agencés le long de ladite paroi de manière à s'étendre sur une zone qui présente le plus grand recouvrement spatial possible avec ledit au moins un aimant du flotteur situé sous la paroi, et
- une unité d'émission sans fil d'un signal électromagnétique qui est raccordée au circuit électrique et qui est apte à transmettre un tel signal à distance en fonction de l'établissement d'un contact dans le circuit électrique.

Ce module indépendant est par exemple un composant d'un dispositif d'évacuation d'un liquide. Ce module peut alternativement avoir d'autres applications dans la mesure où la fonction de base du module est de détecter un niveau de liquide. Ainsi, le signal transmis à distance par le module (à destination d'une entité physiquement séparée du module) n'a pas nécessairement pour fonction d'activer une pompe en vue d'évacuer le liquide du contenant. Le signal peut par exemple avoir une fonction d'alarme dans le cas où un excès de liquide est détecté dans le module (la détection est effectuée par le module lui-même).

Grâce à ce module aucune liaison filaire (difficile à mettre en place notamment pour des raisons d'étanchéité) n'est ainsi à prévoir dans l'infrastructure du lieu où est installé le module.

L'agencement dudit au moins un organe de détection au-dessus de la paroi de séparation étanche horizontale et donc au-dessus du flotteur (et non latéralement par rapport au flotteur) permet d'obtenir un niveau prédéterminé ON (niveau de liquide pour lequel l'aimant et ledit au moins un organe de détection coopèrent) relativement haut et donc un niveau prédéterminé OFF (niveau de liquide pour lequel l'aimant et ledit au moins un organe de détection ne coopèrent plus) relativement haut lui aussi. Ainsi, le niveau de liquide présent dans le module pour le niveau prédéterminé OFF est suffisamment élevé pour éviter des bruits gênants d'aspiration (succion) pouvant survenir lorsque le module est utilisé avec une pompe aspirante et que le niveau de liquide est trop faible. On notera qu'il est même envisageable de configurer l'ensemble de manière à obtenir le plus de liquide possible dans le module pour le niveau prédéterminé OFF. Un désamorçage de la pompe est également ainsi évité ou, en tout cas, le risque de désamorçage de la pompe est fortement réduit.

Ce module est indépendant au sens où il forme un module séparé physiquement (module d'un seul tenant qui comprend tous les éléments fonctionnels nécessaires à son fonctionnement et énumérés ci-dessus) qui peut être simplement mis en place ou disposé dans un lieu d'utilisation ou retiré et qui ne nécessite pas, pour son fonctionnement, de raccordement/branchement électrique et fluidique à l'infrastructure du lieu où il est mis en place. Un tel module est déplaçable de manière unitaire en une seule opération, notamment pour sa mise en place.

Le module peut être logé dans un encombrement réduit, par exemple, dans un contenant où est présent un liquide à évacuer (par exemple au fond de celui-ci ou associé à une paroi du contenant) ou dans un logement ou un conduit qui est relié au contenant ou au logement précité et par lequel le liquide est évacué. Une fixation mécanique du module à son infrastructure d'implantation peut éventuellement être prévue afin qu'il soit immobilisé par rapport à cette dernière. Toutefois, il est par exemple envisageable que le module s'insère mécaniquement dans un logement prévu à cet effet et y soit maintenu en place grâce à l'ajustement des dimensions respectives du module et du logement, sans que des fixations mécaniques supplémentaires ne soient nécessaires.

Le module est par exemple amovible et peut être aisément placé dans/retiré du logement précité qui communique avec le contenant. Les opérations de maintenance sont ainsi facilitées.

Ce module indépendant comprend en lui-même tous les éléments (flotteur avec aimant et organe(s) de détection séparé(s) du liquide par une paroi étanche) qui réalisent la fonction de détection du niveau de liquide dans le module, ainsi que ceux (organe(s) de détection, circuit électrique et unité d'émission sans fil d'un signal) qui réalisent la fonction de transmission à distance d'un signal , par exemple d'un signal de démarrage d'une pompe d'aspiration du liquide présent dans un contenant ou un signal d'alarme en cas de dépassement d'un seuil prédéterminé de liquide. La conception du contenant ou du logement dans lequel est installé le module ou, plus généralement, de l'installation dans laquelle le module est installé, n'a donc pas besoin d'être remise en cause. Le module est ainsi indépendant du contenant, du logement ou de l'installation.

La paroi étanche de séparation est par exemple formée d'un seul tenant avec la structure du module, ce qui permet d'améliorer l'étanchéité du module et de simplifier sa conception.

Ledit au moins un organe de détection est par exemple de nature à coopérer magnétiquement avec l'aimant du flotteur. Il s'agit par exemple d'un interrupteur à lame souple.

Selon d'autres caractéristiques prises isolément ou en combinaison l'une avec l'autre :
- ledit au moins un organe de détection est agencé horizontalement le long de la paroi de séparation étanche ; cet agencement permet audit au moins un organe de détection d'être placé au plus près des lignes de champ magnétique de l'aimant lorsque celui-ci s'approche de la paroi ;
- le module comprend au moins deux organes de détection disposés à une même cote au-dessus de la paroi de séparation étanche et qui sont agencés le long de ladite paroi de manière à s'étendre sur une zone qui présente le plus grand recouvrement spatial possible avec ledit au moins un aimant du flotteur situé sous la paroi; deux organes ainsi agencés permettent d'augmenter la plage de détection du module ; les deux organes sont par exemple alignés l'un avec l'autre et s'étendent ainsi de manière rectiligne sur une zone étendue le long de la paroi ;
- le module comprend au moins un élément mécanique de guidage vertical du flotteur lors de son mouvement de soulèvement et d'abaissement avec le niveau de liquide dans le module ; l'élément de guidage peut avoir comme unique fonction le guidage vertical du flotteur, ce qui permet une fabrication simple ; le flotteur est par exemple monté coulissant axialement autour dudit au moins un élément mécanique de guidage ; le flotteur et ledit au moins un aimant peuvent former conjointement un ensemble compact monté coulissant axialement autour dudit au moins un élément mécanique de guidage, permettant ainsi au flotteur d'avoir une amplitude de mouvement optimisée ;
- ledit au moins un élément mécanique de guidage vertical du flotteur a une forme générale allongée disposée perpendiculairement à la paroi de séparation étanche et est, par exemple, raccordée à cette paroi ; ledit au moins un élément mécanique de guidage vertical peut avoir comme unique fonction de guider le flotteur ; ledit au moins un élément mécanique de guidage vertical comprend par exemple une tige ou doigt axial qui s'étend verticalement et autour duquel le flotteur est par exemple monté coulissant axialement ; ledit au moins un élément mécanique de guidage en forme de tige ou doigt axial peut être plein ou creux ;
- la paroi de séparation étanche comporte un ou plusieurs reliefs agencés sur une face de la paroi qui est orientée en direction du flotteur, le ou les reliefs sont configurés de manière à empêcher un contact mécanique entre le flotteur et ladite face de la paroi lorsque le flotteur s'élève avec le niveau de liquide dans le module ; le ou les reliefs qui s'étendent en direction du flotteur et en éloignement de la paroi permettent de conserver de l'air en contact avec la première face de la paroi (air par exemple présent entre les reliefs) et ainsi d'éviter au flotteur de se coller à la première face lorsqu'il s'en approche sous l'effet de la montée du liquide ; un tel « collage » risquerait d'être préjudiciable au fonctionnement du module, voire de composant(s) associé(s) (tels qu'une pompe d'aspiration) au module dans la mesure où le module détecterait en permanence un niveau prédéterminé ON ;
- le ou les reliefs prennent la forme de nervures qui sont particulièrement simples à fabriquer d'un seul tenant avec la paroi par exemple par moulage ; d'autres types de reliefs peuvent alternativement être envisagés ;
- le module comprend une extension verticale qui entoure le flotteur de manière à délimiter radialement une chambre interne au module et qui est ouverte à une extrémité inférieure opposée à l'extrémité supérieure où est agencée la paroi de séparation étanche, le flotteur étant apte à se soulever et à s'abaisser avec le niveau de liquide dans la chambre ; l'extension verticale s'étend axialement jusqu'à une cote qui est inférieure à la cote du flotteur dans le deuxième niveau prédéterminé OFF; cet agencement protège efficacement le flotteur d'éventuels chocs, contacts avec des objets/éléments externes au module;
   La chambre (logement) interne au module est fermée en haut et ouverte en bas; cette chambre interne est fermée en haut par la paroi de séparation du module et ouverte en bas pour permettre au liquide d'y pénétrer et de s'élever à l'intérieur de l'espace, provoquant ainsi l'élévation du flotteur ; l'extension verticale s'étend par exemple à partir de la paroi de séparation en direction du bas du module et en éloignement de cette paroi ;
- l'extension verticale est ajourée de manière à faire communiquer la chambre interne avec l'extérieur du module ; cette configuration permet de chasser l'air de la chambre et d'aider le flotteur à s'abaisser lorsque le niveau de liquide diminue (par exemple sous l'effet d'aspiration provoqué par une pompe) ; l'extension verticale prend ainsi la forme d'une cage renfermant le flotteur et ouverte latéralement sur l'extérieur ;
- l'extension verticale prend la forme d'une jupe axiale (paroi formant jupe) dans laquelle plusieurs lumières sont pratiquées, les lumières sont espacées l'une de l'autre suivant la périphérie de la jupe et permettent de faire communiquer la chambre interne avec l'extérieur du module ;
- l'unité d'émission sans fil d'un signal et le circuit électrique sont logés dans une partie du module qui est disposée au-dessus de la paroi de séparation étanche, dans un espace interne séparé du liquide.

L'invention a également pour objet un dispositif d'évacuation d'un liquide présent dans un contenant, caractérisé en ce qu'il comprend :
- un module indépendant de détection d'un niveau de liquide tel que brièvement mentionné ci-dessus, l'unité d'émission sans fil d'un signal étant apte à transmettre un tel signal à une unité de réception de signal distante en fonction de l'établissement d'un contact dans le circuit électrique,
- une pompe d'aspiration qui est reliée au contenant de liquide et à laquelle est associée l'unité de réception de signal, la pompe étant apte à aspirer du liquide lorsque l'unité de réception reçoit un signal de l'unité d'émission de signal distante.

Les mêmes caractéristiques et avantages que ceux exposés ci-dessus en relation avec le module s'appliquent également ici au dispositif qui comprend un tel module.

L'utilisation d'un module de détection du niveau de liquide dans ce dispositif est avantageuse dans la mesure où le module est capable, en fonction du niveau de liquide détecté, de transmettre un signal de démarrage (enclenchement) à une pompe aspirante située à distance du module (activation à distance de la pompe).

On notera que la pompe peut être disposée en aval du contenant, notamment en aval du logement ou du conduit qui est relié soit au logement soit directement au contenant.

La pompe peut de cette manière être aménagée dans un endroit distant où les contraintes d'encombrement sont moins sévères que là où est placé le contenant.

L'invention a aussi pour objet un ensemble comprenant un contenant qui est apte à contenir un liquide, caractérisé en ce qu'il comprend également un dispositif ou un module tels que brièvement exposés ci-dessus.

Selon des exemples d'application non limitatifs, le contenant est un bac receveur de douche, un réservoir d'eaux de pluie, un regard en sous-sol, un bac d'eaux de pluie...

Le module tel que brièvement exposé ci-dessus peut être appliqué à la détection d'un niveau de liquide dans un contenant et un signal électromagnétique est émis lorsque le niveau de liquide est supérieur (trop plein de liquide) ou inférieur (manque de liquide) à un seuil prédéterminé.

D'autres caractéristiques et avantages apparaitront au cours de la description qui va suivre, donnée uniquement à titre d'exemple non limitatif et faite en référence aux dessins annexés, sur lesquels :
- la figure 1 est une vue schématique en coupe axiale d'un module de détection d'un niveau de liquide selon un mode de réalisation de l'invention ;
- la figure 2 est une vue schématique de dessous de la paroi de séparation du module de la figure 1 ;
- la figure 3 est une vue schématique en coupe axiale d'un module de détection d'un niveau de liquide selon un autre mode de réalisation de l'invention ;
- la figure 4 est une vue schématique en coupe axiale d'un dispositif d'évacuation d'un liquide d'un contenant utilisant le module de la figure 3.

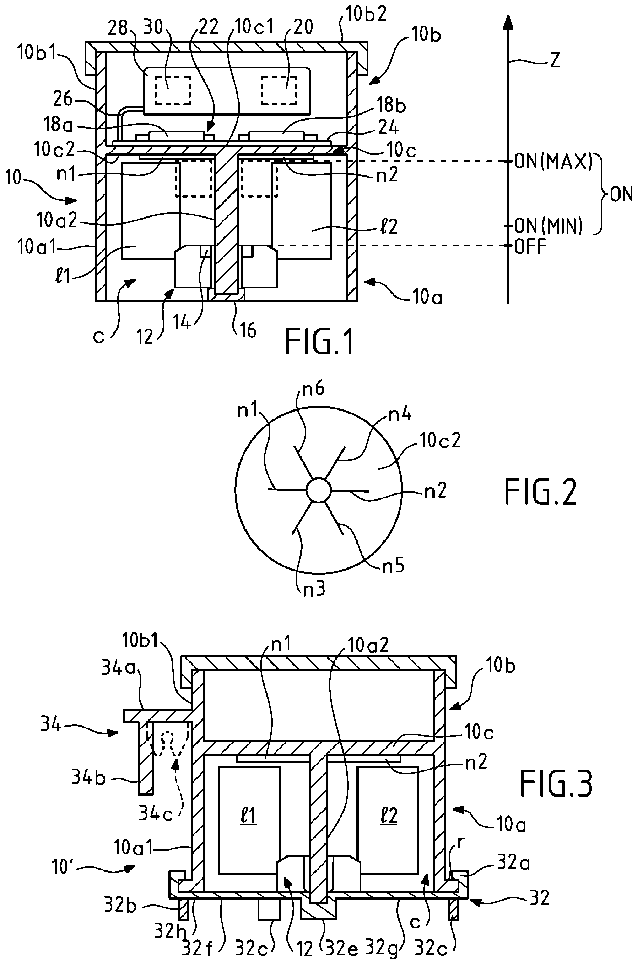

Comme représenté à la figure 1 et désigné de manière générale par la référence notée 10, un module de détection d'un niveau de liquide forme un bloc ou structure comprenant une partie inférieure 10a et une partie supérieure 10b séparées l'une de l'autre par une paroi étanche 10c. Le module est représenté en position de fonctionnement verticale (axe Z). Les parties inférieure et supérieure sont délimitées extérieurement par une paroi qui définit l'enveloppe externe de la structure ou bloc du module. Cette enveloppe externe renferme les principaux composants fonctionnels du module.

Les parties inférieure 10a et supérieure 10b ont chacune une forme générale cylindrique creuse destinée à renfermer des éléments fonctionnels du module. Dans l'exemple représenté les deux parties 10a, 10b ont le même diamètre afin de former un ensemble compact facile à loger, par exemple dans une bonde. Toutefois, les deux parties peuvent alternativement avoir des diamètres différents, voire prendre d'autres formes.

La partie supérieure 10b comprend par exemple une portion cylindrique délimitée par une paroi verticale de forme annulaire 10b1. La portion cylindrique est ouverte à sa partie supérieure et est fermée par une coiffe ou capot 10b2, fixé de manière amovible, par exemple par encliquetage, et étanche par un joint torique. Le caractère amovible de la coiffe permet d'accéder facilement par le haut à l'intérieur de la portion cylindrique (espace supérieur interne du module étanche vis-à-vis de l'extérieur), notamment pour des opérations de maintenance.

La partie inférieure 10a comprend une extension verticale 10a1 qui s'étend vers le bas à partir de la paroi étanche horizontale 10c et en éloignement de celle-ci. Cette extension verticale descendante 10a1 a par exemple la forme générale d'une paroi cylindrique ou jupe.

Une excroissance verticale 10a2 ayant une forme générale allongée s'étend verticalement vers le bas à partir de la paroi horizontale 10c à laquelle elle est raccordée et en éloignement de celle-ci. Cette excroissance 10a2, centrée sur la paroi 10c, est par exemple formée d'un seul tenant avec la paroi 10c (par exemple par moulage) et a une forme de tige ou de doigt. L'excroissance 10a2 est par exemple pleine et ne possède pas de cavité interne. L'extension verticale 10a1 s'étend parallèlement à la tige 10a2 mais l'extrémité libre de l'extension verticale 10a1 est située à une cote inférieure à celle de l'extrémité libre inférieure de la tige. L'extension verticale 10a1 entoure ainsi la tige 10a2 et délimite intérieurement une chambre (ou espace) inférieure c interne au module. La chambre c est fermée à son extrémité supérieure par la paroi de séparation 10c et ouverte à son extrémité opposée inférieure libre afin que du liquide puisse remonter à l'intérieur de celle-ci comme on le verra par la suite. La chambre a ici une forme générale d'espace cylindrique.

Comme représenté sur la figure 1, l'extension verticale 10a1 est ajourée localement sur au moins une partie de sa circonférence afin d'ouvrir la chambre radialement (ou latéralement) et donc de faire communiquer l'intérieur de la chambre avec l'extérieur du module.

Plus particulièrement, dans cet exemple des lumières l1, l2 sont pratiquées dans l'extension verticale 10a1, sur au moins une partie de la hauteur de celle-ci. Les lumières sont par exemple agencées plus près de la paroi de séparation que de l'extrémité inférieure libre de l'extension 10a1.

Les lumières sont espacées angulairement l'une de l'autre suivant la périphérie de l'extension verticale ou jupe 10a1. Deux lumières sont visibles mais davantage de lumières peuvent être présentes dans l'extension verticale.

Le module 10 comprend les éléments fonctionnels suivants :
- un flotteur 12 comprenant au moins un aimant permanent 14 (ici un seul aimant est prévu) et qui est apte à être en contact avec un liquide (ex : de l'eau) et à se soulever lorsque le niveau de liquide s'élève dans le module (dans la chambre interne c) ; le flotteur 12 forme une ceinture annulaire autour de la tige 10a2 et l'aimant 14 a une forme générale de tore localisé par exemple au niveau d'un bord périphérique interne supérieur du flotteur ; le ou les aimants 14 peuvent alternativement être localisés différemment et, par exemple, le long du bord supérieur du flotteur qui fait face à la paroi de séparation 10c ; un embout 16 formant butée axiale est fixé sur l'extrémité libre inférieure de la tige 10a2 afin de limiter le déplacement vers le bas du flotteur 12 ; en position de repos, c'est-à-dire lorsqu'il n'y a pas de liquide, le flotteur est en position basse et repose sur la butée ;
- par exemple deux organes de détection 18a, 18b qui sont chacun aptes, d'une part, à coopérer électromagnétiquement avec l'aimant 14 lorsque le flotteur 12 s'est soulevé jusqu'à un niveau prédéterminé ON et, d'autre part, en fonction de cette coopération (interaction électromagnétique), à établir un contact dans un circuit électrique du module afin d'autoriser le passage d'un courant électrique dans le circuit ; les organes de détection sont placés au-dessus de la paroi de séparation étanche horizontale 10c et coopèrent à travers ladite paroi avec ledit au moins un aimant permanent du flotteur situé dans le liquide de telle manière que la détection du niveau de liquide dans le module s'effectue ainsi sans contact (les organes de détection peuvent donc être qualifiés de manière générale d'organes de détection sans contact) ; les organes de détection sont par exemple des interrupteurs à lames souples (ex : ampoules Reed) qui sont chacun sensibles au champ magnétique généré par l'aimant et répondent à ce dernier;
- une unité d'émission sans fil 20 d'un signal électromagnétique qui est raccordée au circuit électrique et qui est apte à transmettre un tel signal à distance en fonction de l'établissement d'un contact dans le circuit électrique.

On notera que dans la position la plus basse du flotteur (niveau prédéterminé OFF) le flotteur et les organes ne peuvent coopérer électromagnétiquement ensemble. Pour cette position le niveau de liquide dans le module est suffisant pour éviter un phénomène bruyant d'aspiration ou de succion lorsque le liquide est aspiré, par exemple par une pompe d'aspiration. Lorsque le niveau de liquide monte dans le module, le flotteur s'élève et s'écarte donc de cette position la plus basse et rentre dans une zone d'interaction électromagnétique avec les organes 18a, 18b (les organes sont situés dans le champ magnétique de l'aimant 14). Cette zone est délimitée par les positions ou niveaux ON (MIN), position à partir de laquelle l'interaction électromagnétique débute, et ON (MAX), position correspondant à la position la plus haute que peut atteindre le flotteur dans la chambre et qui est représentée en pointillés sur la figure 1.

Les organes de détection (ils peuvent alternativement être plus de deux, voire réduits à un seul), le circuit électrique et l'unité 20 sont situés au-dessus de la paroi de séparation 10c et notamment à l'intérieur de la partie supérieure 10b du module.

Plus particulièrement, le module 10 comprend, à l'intérieur de la partie supérieure 10b, un circuit électrique 22 dont font partie les organes de détection 18a, 18b. Le circuit 22 comprend par exemple :
- une première carte électronique 24 sur laquelle les organes 18a, 18b sont montés et qui est fixée contre une première face, dite interne, 10c1 de la paroi 10c,
- un câble de raccordement 26 de cette carte à une entité électronique 28,
- l'entité électronique 28 comprend une deuxième carte électronique sur laquelle est montée l'unité d'émission sans fil 20 et une pile 30 par exemple au lithium. On notera que l'ensemble des composants qui viennent d'être décrits peuvent alternativement être implantés sur une seule carte électronique.

On notera que les deux organes 18a, 18b sont alignés l'un avec l'autre au-dessus de la paroi 10c et à la même cote l'un que l'autre.

Les deux organes 18a, 18b sont alignés l'un avec l'autre de telle manière que leur agencement conjoint s'étende spatialement sur une zone d'extension transversale (perpendiculairement à l'axe Z), ici horizontale, qui est plus étendue que la zone d'extension transversale du flotteur 12 situé en-dessous. Ainsi, la plage de détection du module de détection est augmentée. Quelle que soit la position verticale du flotteur (et donc de l'aimant) et même si sa position transversale est susceptible de varier dans une certaine mesure, l'agencement précité des deux organes permet de détecter de manière fiable et précise la position du flotteur.

Le flotteur 12 est monté coulissant axialement autour de la tige 10a2 qui lui sert d'élément mécanique de guidage axial lors du mouvement vertical de soulèvement et d'abaissement du flotteur en fonction du niveau de liquide à l'intérieur de la chambre c. La tige 10a2 a ici pour unique fonction de guider le flotteur en fonction du niveau de liquide à l'intérieur de la chambre c.

La paroi de séparation 10c comprend une deuxième face 10c2 qui est orientée vers la chambre c. Cette deuxième face 10c2 tournée vers le bas sur la figure 1 comporte plusieurs éléments en relief qui s'étendent à partir de la paroi 10c à l'intérieur de la chambre c. Ces éléments en relief sont espacés les uns des autres de manière à empêcher que le flotteur, en s'approchant de la paroi, n'entre en contact avec elle et ne s'y « colle ». Deux éléments en relief n1, n2 sont illustrés sur la figure 1. Ces éléments sont par exemple des nervures aménagées sur la face 10c2, diamétralement opposées deux à deux.

La figure 2 illustre en vue de dessous la deuxième face 10c2 avec une pluralité de nervures (ex : 6 nervures) diamétralement opposées deux à deux et par exemple régulièrement espacées les unes des autres. Comme représenté sur la figure 1, les nervures sont par exemple disposées près de la base de la tige 10a2 (à l'endroit où la tige se raccorde à la paroi 10c), voire au contact de celle-ci, pour empêcher un contact du flotteur dans cette zone. A l'opposé de cette zone, à proximité de la périphérie externe de la face 10c2 (figs. 1 et 2), les nervures n'ont pas besoin d'être présentes dans la mesure où le flotteur n'atteint pas cette zone au cours de son déplacement. Les nervures peuvent donc s'étendre sur une distance inférieure au rayon du disque représenté par la paroi 10c.

Le module 10 forme ainsi un bloc mécaniquement indépendant/autonome par rapport à l'objet/infrastructure auquel il s'applique. Ce module, pour son fonctionnement, n'a pas besoin d'être raccordé électriquement et fluidiquement à une source électrique et à une source fluidique puisqu'il comporte en lui-même tous les éléments fonctionnels pour détecter un niveau de liquide prédéterminé dans un endroit donné. Ce module peut donc être installé de manière amovible, sans outil, dans une multitude d'endroits (par exemple après qu'une installation ait été achevée dans la mesure où l'on veut améliorer l'évacuation de liquide d'un contenant) pourvu que les dimensions de l'endroit d'installation du module soient adaptées à celles de ce dernier. Le module peut être mis en place simplement sans avoir à modifier la structure de l'installation/l'infrastructure de celle-ci.

Le module 10 peut être utilisé dans un dispositif d'évacuation d'un liquide présent dans un contenant en coopération avec une pompe d'aspiration équipée d'une (ou associée à) unité de réception adaptée à recevoir un signal émis par l'unité d'émission 20 afin d'activer la pompe pour aspirer le liquide du contenant.

Le module peut être disposé dans le contenant lui-même, notamment au fond de celui-ci, ou dans un logement ou une extension ou une conduite relié à ce contenant.

La figure 3 illustre un module 10' de détection de niveau de liquide selon un autre mode de réalisation. Ce module reprend tous les éléments des figures 1 et 2 (les numéros des éléments des figures 1 et 2 sont conservés) à l'exception de l'embout 16. Sur cette figure tous les détails de la figure 1 n'ont pas été représentés par souci de simplification.

Toutefois, le module 10' diffère du module 10 par les éléments décrits ci-après.

L'extension axiale 10a1 est pourvue à son extrémité libre inférieure d'un rebord périphérique externe r.

Le module 10' comprend un socle 32, de diamètre supérieur à celui de la chambre c, qui est pourvu d'une collerette périphérique 32a formant un retour interne dans lequel s'insère (par exemple par encliquetage) le rebord r. Le socle est ainsi monté de manière amovible à l'extrémité libre inférieure de l'extension 10a1. Le socle 32 est équipé de plusieurs pieds périphériques 32b, 32c, 32d (un nombre et des formes différents de pieds sont envisageables) agencés sur la périphérie du socle, à proximité de la collerette périphérique 32a et qui s'étendent en direction opposée de la collerette. Le socle comporte également un pied central 32e dans lequel est insérée l'extrémité libre inférieure de la tige 10a2 (ici, l'extrémité libre inférieure de la tige 10a2 est située à une cote inférieure à celle du rebord r, contrairement à l'agencement de la figure 1 ; le socle de la figure 3 protège le flotteur d'agressions extérieures, d'éventuels chocs...). Le socle est par exemple formé par des rayons (dont seuls deux 32f, 32g sont apparents sur la figure 3) qui relient le pied central 32e à une couronne périphérique 32 h située à l'aplomb de l'extension 10a1 et à laquelle sont raccordés les pieds périphériques et la collerette. Les rayons sont espacés angulairement les uns des autres à la manière des rayons d'une roue afin que le liquide puisse pénétrer dans la chambre c (et s'en échapper) par l'extrémité inférieure du module. Les pieds du socle permettent au module d'être positionné sur une surface tout en laissant dégagé entre la surface et l'ensemble formé par la couronne 32h et les rayons un espace suffisant pour le passage du liquide.

Le module 10' comprend également un bras 34a qui s'étend radialement en éloignement de la paroi 10b1 (le bras peut alternativement être agencé plus bas, par exemple à la cote de la paroi de séparation 10c ou au niveau de l'extension 10a1) et qui est pourvu, à distance de la paroi 10b1 d'un doigt vertical 34b dirigé vers le bas, par exemple en direction du socle.

L'ensemble du bras 34a et du doigt 34b forme un ensemble 34 de positionnement et de fixation du module dans un logement équipé d'élément(s) de fixation complémentaire(s).

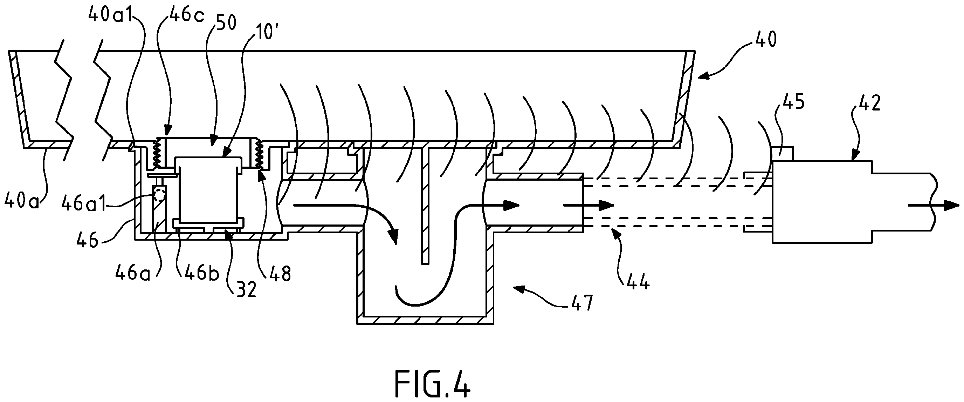

La figure 4 illustre un exemple d'installation possible du module 10' permettant une évacuation de liquide présent dans un contenant 40. Sur cette figure l'intérieur du module 10' (représenté très schématiquement) n'a pas été représenté par souci de simplification. Le module 10 pourrait alternativement être utilisé dans une telle application. Le module 10' est associé à une pompe d'aspiration de liquide 42 distante qui est reliée au contenant 40 par l'intermédiaire d'une canalisation 44.

Une unité 45 de réception d'un signal électromagnétique est associée à la pompe 42. L'unité 45 est par exemple montée sur le coffrage de la pompe et raccordée au câblage électrique interne à la pompe pour commander son fonctionnement. On notera que l'unité peut être séparée physiquement de la pompe et uniquement reliée électriquement à celle-ci.

Le module 10' et la pompe 42 forment un dispositif d'évacuation du liquide présent dans le contenant 40 (l'unité de réception 45 fait également partie du dispositif).

Le contenant de la figure 4 comporte, localement, au niveau de son fond 40a une extension vers le bas qui forme un puits 46 et, en aval, un siphon indépendant 47 monté au fond du contenant et qui est raccordé à une des parois latérales du puits, à proximité du fond dudit puits. La canalisation 44 est raccordée au siphon 47. Le puits 46 comporte une cheminée 46a qui est solidaire du fond 46b du puits et s'élève en direction de l'ouverture supérieure 46c du puits. La cheminée est ouverte à son extrémité supérieure libre et creuse sur au moins une partie de sa hauteur.

Le module 10' est introduit dans l'ouverture supérieure 46c du puits et le doigt plongeant 34b de la figure 3 est engagé dans la partie creuse de la cheminée afin de positionner et de fixer le module 10'. Le doigt est engagé dans la cheminée et enfoncé vers le bas jusqu'à ce que les pieds du socle 32 touchent la surface supérieure du fond 46a (comme décrit plus haut un espace suffisant est laissé entre la surface du fond et l'extrémité inférieure du module pour le liquide. Les dimensions respectives de la cheminée et du doigt sont ajustées afin de permettre un montage et un démontage aisés du module. Le montage peut par exemple être fait en force. Alternativement, un organe supplémentaire 34c (illustré en pointillés sur la figure 3) peut être prévu sur le bras 34a (ici il s'agit par exemple d'une fourche dirigée vers le bas) et qui coopère avec un organe ou élément de fixation complémentaire fixé à la cheminée 46a. Par exemple, l'organe complémentaire sur la cheminée peut être un pion 46a1 (représenté très schématiquement en pointillés sur la figure 4) qui s'étend horizontalement vers l'arrière de la figure et sur lequel la fourche de l'organe 34c vient s'encliqueter pas simple poussée de l'utilisateur. Le module est ainsi verrouillé en position au fond du puits. Le démontage est relativement aisé puisqu'il suffit de retirer le module en désencliquetant (avec un effort raisonnable pour une personne) sans outil.

On notera que d'autres systèmes de verrouillage peuvent être utilisés de manière alternative avec des organes complémentaires sur le module (par exemple le bras) et dans le logement (par exemple le puits et plus particulièrement la cheminée).

Lorsque le module 10' est installé au fond du puits (fig. 4), une première bague 48 est montée dans l'ouverture 46c du puits et positionnée sur le rebord périphérique 40a1 du fond 40a. Cette bague est pourvue d'un filetage interne. Une deuxième bague 50 de diamètre inférieur, munie d'une grille (non représentée) est vissée par son filetage externe dans le filetage interne de la première bague 48 et vient ainsi entourer le module 10'.

Lorsque du liquide est présent dans le contenant 40 et s'évacue par le bas, il remplit le puits 46 et s'élève dans la chambre c du module (figs. 1 et 3). L'élévation du liquide provoque la montée du flotteur 12 (à partir de sa position basse de repos OFF) qui coulisse autour de la tige 10a2 jusqu'à atteindre une position haute (par exemple celle représentée en pointillés sur la figure 1 ou une position intermédiaire ON entre la position ON(MAX) et la position ON(MIN) incluant éventuellement la position ON(MIN)) dans laquelle le champ magnétique de l'aimant 14 interagit avec les organes de détection 18a, 18b. Sous l'action du champ magnétique les organes 18a, 18b établissent un contact électrique dans le circuit (fermant ainsi celui-ci), ce qui autorise le passage d'un courant électrique via le câble 26 (fig. 1) qui parvient à l'unité d'émission sans fil 20 et permet l'émission d'un signal électromagnétique, par exemple radio et notamment en hautes fréquences (HF), en direction de l'unité de réception 45. La réception de ce signal par l'unité 45 provoque le démarrage de la pompe 42 qui, raccordée au puits 46 via la canalisation 44, et le siphon 47, aspire le liquide présent dans le puits et le siphon et donc dans le contenant 40, comme indiqué par les flèches sur la figure 4.

Lorsque le niveau de liquide dans le puits descend, le niveau de liquide descend également à l'intérieur de la chambre c du module 10' et le flotteur coulisse vers le bas jusqu'à atteindre sa position de repos (OFF) dans laquelle il ne peut plus coopérer avec les organes 18a, 18b. Le circuit électrique s'ouvre et l'unité d'émission 20 arrête d'envoyer un signal.

La pompe s'arrête alors de fonctionner jusqu'à la prochaine montée de liquide dans le puits.

Grâce à la disposition des organes 18a, 18b au-dessus de la paroi de séparation (et non à la même cote que le flotteur et son ou ses aimants), le niveau prédéterminé OFF est suffisamment haut par rapport au fond du logement (ex : puits) dans lequel le module est placé pour que, lorsque le niveau de liquide descend dans le module (le ou les aimants interagissent toujours avec les organes 18a, 18b), aucun bruit de succion désagréable pour les utilisateurs ne soit constaté. Un tel bruit de succion est en effet présent lorsqu'il n'y a plus assez de liquide et que la pompe continue d'aspirer du liquide.

Dans le mode de réalisation qui vient d'être décrit le liquide est de l'eau. Toutefois, d'autres liquides peuvent être envisagés selon les applications (ex : liquides alimentaires tels que du lait.....).

On notera que le contenant des figures précédentes peut être un bac receveur de douche (le module est par exemple mais non nécessairement placé dans la bonde), un réservoir d'eaux de pluie (puisard), un regard disposé en sous-sol, un caniveau.....Cette liste n'est toutefois pas exhaustive.

Dans un autre mode de réalisation non représenté, le module peut servir à envoyer un signal (en cas de montée du niveau d'un liquide dans un contenant et de détection du niveau par rapport à un seuil prédéterminé) à une unité distante d'un système d'alarme ou autre système. Le système d'alarme peut alors démarrer une procédure d'alarme (avec envoi d'un signal d'alarme) visant à alerter des personnes concernées par la montée du liquide.

Dans cet autre mode de réalisation, la pompe peut être présente ou non.

Une telle application peut être utilisée afin de détecter des fuites d'eau ou une inondation dans un sous-sol, une cave, un submersible.

On notera que la structure du module, notamment la forme des deux parties 10a-b (l'une logeant les organes de détection et l'électronique de commande d'émission d'un signal à distance et l'autre logeant le ou les flotteurs avec un ou plusieurs aimants) peut varier. La taille de la partie supérieure 10b peut par exemple être réduite. Les dimensions du flotteur et du ou des aimants peuvent également varier.

La nature du ou des organes de détection 18a, 18b peut varier ainsi que la nature des interactions électromagnétiques avec l'organe complémentaire associé au flotteur (ex : interaction capacitive). Plusieurs flotteurs peuvent alternativement être utilisés au lieu d'un seul et plus de deux organes de détection peuvent alternativement être utilisés, par exemple pour coopérer avec plusieurs organes complémentaires associés au(x) flotteur(s).

On peut également séparer la partie 10b avec sa commande électronique, de la partie 10a si le signal HF est occulté par le milieu (par exemple dans le cas d'une installation souterraine) et doit donc être émis à un emplacement plus favorable.

De manière alternative, on peut concevoir, par l'émission d'un ou de plusieurs signaux, des mises en route de musique (douche, bain, réceptacle d'eau pluviale...).

On peut aussi, en marche inversée, avertir d'un manque d'eau (par rapport à un niveau de liquide prédéterminé), par exemple dans les applications suivantes : serres horticoles, piscine, ensemble hydraulique ne devant pas désamorcer.....

## Revendications

1. Module (10) de détection d'un niveau de liquide, qui comprend :
- un flotteur (12) comprenant au moins un aimant (14), le flotteur étant apte à être en contact avec le liquide et à se soulever lorsque le niveau de liquide s'élève dans le module,
- au moins deux organes (18a, 18b) de détection qui sont aptes, d'une part, à coopérer électromagnétiquement avec ledit au moins un aimant du flotteur lorsque ce dernier s'est soulevé jusqu'à un premier niveau prédéterminé (ON) et, d'autre part, en fonction de cette coopération, à établir un contact dans un circuit électrique (22) du module afin d'autoriser le passage d'un courant dans le circuit, ledit flotteur étant également apte à s'éloigner de la paroi de séparation étanche lorsque le niveau de liquide baisse dans le module pour atteindre un deuxième niveau prédéterminé (OFF) dans lequel ledit au moins un aimant du flotteur ne coopère plus électromagnétiquement avec lesdits au moins deux organes (18a, 18b) de détection, lesdits au moins deux organes de détection étant séparés du flotteur par une paroi étanche (10c) qui est disposée au-dessus du flotteur et ce, quel que soit le niveau du flotteur dans le module, une excroissance ayant une forme de tige s'étendant vers le bas à partir de la paroi étanche à laquelle elle est raccordée et en éloignement de celle-ci, le flotteur formant une ceinture annulaire autour de la tige et l'aimant ayant une forme générale de tore, lesdits au moins deux organes de détection étant disposés à une même cote au-dessus de ladite paroi étanche et agencés le long de ladite paroi de manière à s'étendre sur une zone qui présente le plus grand recouvrement spatial possible avec ledit au moins un aimant du flotteur situé sous la paroi, et
- une unité (20) d'émission sans fil d'un signal électromagnétique qui est raccordée au circuit électrique et qui est apte à transmettre un tel signal à distance en fonction de l'établissement d'un contact dans le circuit électrique.

2. Module selon la revendication 1, **caractérisé en ce que** lesdits au moins deux organes (18a, 18b) de détection sont agencés horizontalement le long de la paroi de séparation étanche (10c).

3. Module selon l'une des revendications 1 à 2, **caractérisé en ce qu'**il comprend au moins un élément mécanique de guidage vertical (10a2) du flotteur lors de son mouvement de soulèvement et d'abaissement avec le niveau de liquide dans le module.

4. Module selon la revendication 3, **caractérisé en ce que** ledit au moins un élément mécanique de guidage vertical (10a2) du flotteur a une forme générale allongée disposée perpendiculairement à la paroi de séparation étanche (10c).

5. Module selon l'une des revendications 1 à 4, **caractérisé en ce que** la paroi de séparation étanche (10c) comporte un ou plusieurs reliefs (n1-n6) agencés sur une face (10c2) de la paroi qui est orientée en direction du flotteur, le ou les reliefs sont configurés de manière à empêcher un contact mécanique entre le flotteur et ladite face de la paroi lorsque le flotteur s'élève avec le niveau de liquide dans le module.

6. Module selon la revendication 5, **caractérisé en ce que** le ou les reliefs prennent la forme de nervures (n1-n6).

7. Module selon l'une des revendications 1 à 6, **caractérisé en ce qu'**il comprend une extension verticale (10a1) qui entoure le flotteur (12) de manière à délimiter radialement une chambre interne (c) au module et qui est ouverte à une extrémité inférieure opposée à l'extrémité supérieure où est agencée la paroi de séparation étanche, le flotteur étant apte à se soulever et à s'abaisser avec le niveau de liquide dans la chambre.

8. Module selon la revendication 7, **caractérisé en ce que** l'extension verticale est ajourée de manière à faire communiquer la chambre interne avec l'extérieur du module.

9. Module selon la revendication 8, **caractérisé en ce que** l'extension verticale prend la forme d'une jupe axiale dans laquelle plusieurs lumières (l1, l2) sont pratiquées, les lumières sont espacées l'une de l'autre suivant la périphérie de la jupe et permettent de faire communiquer la chambre interne avec l'extérieur du module.

10. Module selon l'une des revendications 1 à 9, **caractérisé en ce que** l'unité (20) d'émission sans fil d'un signal et le circuit électrique sont logés dans une partie du module qui est disposée au-dessus de la paroi de séparation étanche.

11. Dispositif d'évacuation d'un liquide présent dans un contenant (40), **caractérisé en ce qu'**il comprend :
- un module indépendant de détection d'un niveau de liquide selon l'une des revendications 1 à 10, l'unité (20) d'émission sans fil d'un signal étant apte à transmettre un tel signal à une unité (45) de réception de signal distante en fonction de l'établissement d'un contact dans le circuit électrique,
- une pompe d'aspiration (42) qui est reliée au contenant de liquide et à laquelle est associée l'unité de réception de signal, la pompe étant apte à aspirer du liquide lorsque l'unité de réception reçoit un signal de l'unité d'émission de signal distante.

12. Ensemble comprenant un contenant (40) qui est apte à contenir un liquide, **caractérisé en ce qu'**il comprend également un module de détection d'un niveau de liquide selon l'une des revendications 1 à 10 ou un dispositif d'évacuation d'un liquide selon la revendication 11.

13. Ensemble selon la revendication 12, **caractérisé en ce que** le contenant est choisi parmi un bac receveur de douche, un réservoir d'eau de pluie, un regard en sous-sol, un bac d'eau de pluie

14. Application d'un module de détection d'un niveau de liquide selon l'une des revendications 1 à 10 à la détection d'un niveau de liquide dans un contenant (40) et à l'émission d'un signal électromagnétique lorsque le niveau de liquide est supérieur ou inférieur à un seuil prédéterminé.

## Patentansprüche

1. Modul (10) zur Detektion eines Flüssigkeitsniveaus, das umfasst:
- einen Schwimmer (12), der mindestens ein Magnet (14) umfasst, wobei der Schwimmer imstande ist, mit der Flüssigkeit in Kontakt zu sein und sich zu heben, wenn das Flüssigkeitsniveaus in dem Modul steigt,
- mindestens zwei Detektionsorgane (18a, 18b), die imstande sind, zum einen mit dem mindestens einen Magneten des Schwimmers elektromagnetisch zusammenzuwirken, wenn sich dieser bis auf ein erstes vorher festgelegtes Niveau (ON) gehoben hat, und zum anderen, in Abhängigkeit von diesem Zusammenwirken, einen Kontakt in einem elektrischen Schaltkreis (22) des Moduls herzustellen, um den Durchgang eines Stroms in dem Schaltkreis zu gestatten, wobei der Schwimmer ebenfalls imstande ist, sich von der dichten Trennwand zu entfernen, wenn das Flüssigkeitsniveau im Modul sinkt, um ein zweites vorher festgelegtes Niveau (OFF) zu erreichen, auf dem der mindestens eine Magnet des Schwimmers nicht mehr mit den mindestens zwei Detektionsorganen (18a, 18b) elektromagnetisch zusammenwirkt, wobei die mindestens zwei Detektionsorgane von dem Schwimmer durch eine dichte Wand (10c) getrennt sind, die oberhalb des Schwimmers angeordnet ist und dies unabhängig vom Niveau des Schwimmers in dem Modul, wobei sich ein Vorsprung in Form einer Stange ab der dichten Wand, an der sie angebracht ist und indem sie sich von ihr entfernt, nach unten erstreckt, wobei der Schwimmer einen ringförmigen Gürtel um die Stange bildet und der Magnet eine allgemeine Torusform hat, wobei die mindestens zwei Detektionsorgane auf derselben Seite über der dichten Wand angeordnet sind und entlang der Wand derart eingerichtet sind, dass sie sich über einen Bereich erstrecken, der die größtmögliche räumliche Abdeckung mit dem mindestens einen Magneten des Schwimmers aufweist, der sich unter der Wand befindet, und
- eine drahtlose Sendeeinheit (20) eines elektromagnetischen Signals, die mit dem elektrischen Schaltkreis verbunden ist und die imstande ist, ein derartiges Signals entfernt in Abhängigkeit von der Herstellung eines Kontakts im elektrischen Schaltkreis zu übertragen.

2. Modul nach Anspruch 1, **dadurch gekennzeichnet, dass** die mindestens zwei Detektionsorgane (18a, 18b) horizontal entlang der dichten Trennwand (10c) eingerichtet sind.

3. Modul nach einem der Ansprüche 1 bis 2, **dadurch gekennzeichnet, dass** es mindestens ein mechanisches Element zur vertikalen Führung (10a2) des Schwimmers bei seiner Auf- du Abbewegung mit dem Flüssigkeitsniveau im Modul umfasst.

4. Modul nach Anspruch 3, **dadurch gekennzeichnet, dass** das mindestens eine mechanische Element zur vertikalen Führung (10a2) des Schwimmers eine allgemein längliche Form hat, die senkrecht zu der dichten Trennwand (10c) angeordnet ist.

5. Modul nach einem der Ansprüche 1 bis 4, **dadurch gekennzeichnet, dass** die dichte Trennwand (10c) ein oder mehrere Reliefs (n1-n6) aufweist, die auf einer Fläche (10c2) der Wand eingerichtet sind, die in Richtung des Schwimmers zeigt, wobei das oder die Reliefs derart ausgelegt sind, dass ein mechanischer Kontakt zwischen dem Schwimmer und der Fläche der Wand verhindert wird, wenn sich der Schwimmer mit dem Flüssigkeitsniveau im Modul hebt.

6. Modul nach Anspruch 5, **dadurch gekennzeichnet, dass** das oder die Reliefs die Form von Rippen (n1-n6) annehmen.

7. Modul nach einem der Ansprüche 1 bis 6, **dadurch gekennzeichnet, dass** es eine vertikale Erweiterung (10a1) umfasst, die den Schwimmer (12) derart umgibt, dass eine zum Modul innere Kammer (c) radial begrenzt wird und die an einem unterem Ende offen ist, das einem oberen Ende gegenüberliegt, wo die dichte Trennwand eingerichtet ist, wobei der Schwimmer imstande ist, sich mit dem Flüssigkeitsniveaus in der Kammer zu heben und zu senken.

8. Modul nach Anspruch 7, **dadurch gekennzeichnet, dass** die vertikale Erweiterung derart durchbrochen ist, dass die innere Kammer mit außerhalb des Moduls kommuniziert.

9. Modul nach Anspruch 8, **dadurch gekennzeichnet, dass** die vertikale Erweiterung die Form einer axialen Schürze annimmt, in die mehrere Öffnungen (l1, l2) eingearbeitet sind, wobei die Öffnungen voneinander gemäß der Peripherie der Schürze beabstandet sind und die Kommunikation der inneren Kammer mit außerhalb des Moduls gestatten.

10. Modul nach einem der Ansprüche 1 bis 9, **dadurch gekennzeichnet, dass** die drahtlose Sendeeinheit (20) eines Signals und der elektrische Schaltkreis in einem Teil des Moduls untergebracht sind, der oberhalb der dichten Trennwand angeordnet ist.

11. Vorrichtung zur Ableitung einer Flüssigkeit, die in einem Behälter (40) vorhanden ist, **dadurch gekennzeichnet, dass** sie umfasst:
- ein unabhängiges Detektionsmodul eines Flüssigkeitsniveaus nach einem der Ansprüche 1 bis 10, wobei die drahtlose Sendeeinheit (20) eines Signals imstande ist, ein derartiges Signal an eine entfernte Signalempfangseinheit (45) in Abhängigkeit von der Herstellung eines Kontakts im elektrischen Schaltkreis zu übertragen,
- eine Ansaugpumpe (42), die mit dem Flüssigkeitsbehälter verbunden ist und der die Signalempfangseinheit zugeordnet ist, wobei die Pumpe imstande ist, Flüssigkeit anzusaugen, wenn die Empfangseinheit ein Signal von der entfernten Signalsendeeinheit empfängt.

12. Anordnung, umfassend einen Behälter (40), der imstande ist, eine Flüssigkeit zu enthalten, **dadurch gekennzeichnet, dass** sie ebenfalls ein Modul zur Detektion eines Flüssigkeitsniveaus nach einem der Ansprüche 1 bis 10 oder eine Vorrichtung zur Ableitung einer Flüssigkeit nach Anspruch 11 umfasst.

13. Anordnung nach Anspruch 12, **dadurch gekennzeichnet, dass** der Behälter aus einem Duschtasse, einem Regenwasserreservoir, einem Unterbodenschacht, einem Regenwasserbehälter ausgewählt ist.

14. Anwendung eines Detektionsmoduls eines Flüssigkeitsniveaus nach einem der Ansprüche 1 bis 10 zur Detektion eines Flüssigkeitsniveaus in einem Behälter (40) und zum Senden eines elektromagnetischen Signals, wenn das Flüssigkeitsniveau über oder unter einem vorher festgelegten Grenzwert ist.

## Claims

1. A module (10) for detecting a liquid level, which comprises:
- a float (12) comprising at least one magnet (14), the float being able to be in contact with the liquid and to rise when the liquid level rises in the module,
- at least two detection members (18a, 18b) which are able, on the one hand, to cooperate electromagnetically with said at least one magnet of the float when the latter has risen to a first predetermined level (ON) and, on the other hand, as a function of this cooperation, to establish a contact in an electrical circuit (22) of the module so as to allow the passage of a current in the circuit, said float also being able to move away from the tight separating wall when the liquid level decreases in the module to reach a second predetermined level (OFF) in which said at least one magnet of the float no longer cooperates electromagnetically with said at least two detection members (18a, 18b), said at least two detection members being separated from the float by a tight wall (10c) which is positioned above the float, irrespective of the level of the float in the module, a protuberance in the form of a rod extending downward from the tight wall to which it is connected and moving away from the latter, the float forming an annular belt around the rod and the magnet being generally in the form of a toroid, said at least two detection members being positioned at the same measurement around said tight wall and arranged along said wall so as to extend over a zone which has the greatest possible spatial overlap with said at least one magnet of the float located below the wall, and
- a unit (20) for wirelessly transmitting an electromagnetic signal which is connected to the electrical circuit and which is able to send such a signal remotely based on the establishment of a contact in the electrical circuit.

2. The module according to claim 1, **characterized in that** said at least two detection members (18a, 18b) are arranged horizontally along the tight separating wall (10c).

3. The module according to one of claims 1 to 2, **characterized in that** it comprises at least one mechanical vertical guiding element (10a2) for guiding the float during its raising and lowering movement with the liquid level in the module.

4. The module according to claim 3, **characterized in that** said at least one mechanical vertical guiding element (10a2) for guiding the float has an elongated general shape positioned perpendicularly to the tight separating wall (10c).

5. The module according to one of claims 1 to 4, **characterized in that** the tight separating wall (10c) includes one or several reliefs (n1-n6) arranged on a face (10c2) of the wall which is oriented toward the float, the relief(s) are configured so as to prevent a mechanical contact between the float and said face of the wall when the float rises with the liquid level in the module.

6. The module according to claim 5, **characterized in that** the relief(s) assume the form of ribs (n1-n6).

7. The module according to one of claims 1 to 6, **characterized in that** it comprises a vertical extension (10a1) which surrounds the float (12) so as to radially delimit an inner chamber (c) in the module and which is open at a lower end opposite the upper end where the tight separating wall is arranged, the float being able to rise and lower with the liquid level in the chamber.

8. The module according to claim 7, **characterized in that** the vertical extension is perforated so as to place the inner chamber in communication with the outside of the module.

9. The module according to claim 8, **characterized in that** the vertical extension assumes the form of an axial skirt in which several apertures (11, 12) are formed, the apertures are spaced apart from one another along the periphery of the skirt and make it possible to place the inner chamber in communication with the outside of the module.

10. The module according to one of claims 1 to 9, **characterized in that** the wireless transmission unit (20) for transmitting a signal and the electrical circuit are housed in a part of the module which is positioned above the tight separating wall.

11. A device for discharging a liquid present in a container (40), **characterized in that** it comprises:
- an independent detection module for detecting a liquid level according to one of claims 1 to 10, the unit (20) for wirelessly transmitting a signal being able to send such a signal to a remote signal reception unit (45) based on the establishment of a contact in the electrical circuit,
- a suction pump (42) which is connected to the liquid container and with which the signal reception unit is associated, the pump being able to suction liquid when the reception unit receives a signal from the remote signal transmission unit.

12. An assembly comprising a container (40) which is able to contain a liquid, **characterized in that** it also comprises a module for detecting a liquid level according to one of claims 1 to 10 or a device for discharging a liquid according to claim 11.

13. The assembly according to claim 12, **characterized in that** the container is chosen among a shower basin, a rainwater storage tank, an underground access hatch, a rainwater basin.

14. An application of a detection module for detecting a liquid level according to one of claims 1 to 10 to the detection of a liquid level in a container (40) and to the transmission of an electromagnetic signal when the liquid level is greater than or less than a predetermined threshold.
